# EUROPEAN PATENT APPLICATION

(11) **EP 4 062 796 A1**
(43) Date of publication of application: **28.09.2022**
(21) Application number: 21780541.5
(22) Date of filing: 20.04.2021
(51) Int. Cl.: A47B 9/00, H04L 29/08

(54) **MULTI-COMMUNICATION LIFTING TABLE SYSTEM**

(30) Priority: 31.03.2020 CN 202010243997
(71) Applicant: Zhejiang Jiecang Linear Motion Technology Co., Ltd, Shaoxing, Zhejiang 312500 (CN)
(72) Inventor: XU, Xin, Shaoxing, Zhejiang 312500 (CN); FU, Xuhui, Shaoxing, Zhejiang 312500 (CN)
(74) Representative: karo IP
(86) International application number: PCT/CN2021/088240
(87) International publication number: WO 2021/197502

(57) **Abstract**

Disclosed is a multi-communication height adjustable desk system, which includes a lifting column for adjusting lifting of a desk top, a drive motor for driving lifting of the lifting column, a controller for sending a drive instruction to the drive motor and a hand controller for sending a control instruction to the controller. It further includes an intelligent terminal stored with a set height of the height adjustable desk. The manual controller includes a first communication module for communicating with the intelligent terminal; The manual controller receives an authentication instruction sent by the intelligent terminal through the first communication module. After the authentication instruction is verified, the first communication module receives set height data of the height adjustable desk sent by the intelligent terminal and sends the control instruction to the controller according to the set height data of the height adjustable desk. The controller sends the drive instruction to the drive motor according to the control instruction to achieve a height adjustment of the lifting column.

## Description

### FIELD

The present invention relates to the field of office supplies, in particular to a multi-communication height adjustable desk system.

### BACKGROUND

The existing height adjustable desk system includes a lifting column for adjusting lifting of a desk top, a drive motor driving lifting of the lifting column, a controller for sending a drive instruction to the drive motor and a manual controller for sending a control instruction to the controller.

As there is no authentication function, anyone can adjust and set the height adjustable desk through a manual controller, which violates the privacy of users and requires users to adjust it again when using it.

### SUMMARY

In order to solve the above problems, the present invention provides a multi-communication height adjustable desk system.

A multi-communication height adjustable desk system includes a lifting column for adjusting lifting of a desk top, a drive motor for driving lifting of the lifting column, a controller for sending a drive instruction to the drive motor and a manual controller for sending a control instruction to the controller. The system further includes an intelligent terminal stored with a set height of a height adjustable desk, and the manual controller includes a first communication module for communicating with the intelligent terminal; the manual controller receives an authentication instruction sent by the intelligent terminal through the first communication module, after the authentication instruction is verified, the first communication module receives set height data of the height adjustable desk sent by the intelligent terminal, and sends the control instruction to the controller according to the set height data of the height adjustable desk, the controller sends the drive instruction to the drive motor according to the control instruction to achieve a height adjustment of the lifting column.

Preferably, the system further includes a second communication module for communicating with the intelligent terminal, after the authentication instruction is verified, the controller receives the set height data of the height adjustable desk sent by the intelligent terminal through the second communication module, and sends the control instruction to the controller according to the set height data of the height adjustable desk, and the controller sends the drive instruction to the drive motor according to the control instruction to achieve a height adjustment of the lifting column.

Preferably, after the authentication instruction is verified, the controller communicates with the intelligent terminal through the second communication module and receives the control instruction sent by the intelligent terminal, the controller sends the drive instruction to the drive motor according to the control instruction to achieve the height adjustment of the lifting column.

Preferably, the controller records a connection time of the second communication module and the intelligent terminal, and when the connection time is greater than a set time, the controller sends a reminding signal to the intelligent terminal through the second communication module.

Preferably, the system further includes third communication modules and a server connected with the third communication modules, the third communication modules form a MESH network therebetween, and the server receives and stores the connection time of the second communication module and the intelligent terminal uploaded by the third communication modules.

Preferably, the intelligent terminal sends reservation time information and authentication information to the server, and the server selects unconnected third communication modules and sends the authentication information to the controller through the third communication modules.

Preferably, the first communication module is an NFC module.

Preferably, a communication frequency band of the NFC module is 13.56 MHz.

Preferably, the second communication module is a Bluetooth module.

Preferably, the third communication modules are WIFI modules.

The present invention has the following beneficial effects:
1. The first communication module receives the authentication instruction sent by the intelligent terminal, after the authentication instruction is verified, the first communication module receives the set height data of the height adjustable desk sent by the intelligent terminal, and sends the control instruction to the controller according to the set height data of the height adjustable desk, and the controller sends the drive instruction to the drive motor according to the control instruction to achieve the height adjustment of the lifting column;
2. the third communication modules form a MESH network therebetween to achieve the mutual transmission of data and upload the data to the server at the same time. At the server end, a current state of each height adjustable desk can be displayed according to the connection time of the second communication module and the intelligent terminal; and
3. The intelligent terminal sends the reservation time information and authentication information to the server, and the server selects unconnected third communication modules, and sends the authentication information to the controller through the third communication modules, thereby achieving the remote reservation function.

### BRIEF DESCRIPTION OF THE DRAWINGS

The present invention will be further explained in conjunction with the drawings and the specific embodiments.
FIG. 1 is a structural schematic diagram of a multi-communication height adjustable desk system according to an embodiment of the present invention;
FIG. 2 is a structural schematic diagram of a multi-communication height adjustable desk system according to another embodiment of the present invention; and
FIG. 3 is a structural schematic diagram of a multi-communication height adjustable desk system according to yet another embodiment of the present invention.

### DETAILED DESCRIPTION

The technical solution of the present invention is described further below in conjunction with the accompanying drawings, but the present invention is not limited to these embodiments.

The basic idea of the present invention is that the manual controller receives the authentication instruction sent by the intelligent terminal through the first communication module, after the authentication instruction is verified, the first communication module receives the set height data of the height adjustable desk sent by the intelligent terminal, and sends a control instruction to the controller according to the set height data of the height adjustable desk, the controller sends a drive instruction to the drive motor according to the control instruction to achieve the height adjustment of the lifting column. On the one hand, the height adjustment of the height adjustable desk can only be realized after the authentication verification. On the other hand, the height adjustment of the height adjustable desk can be achieved automatically according to the set height data of the height adjustable desk after the authentication verification.

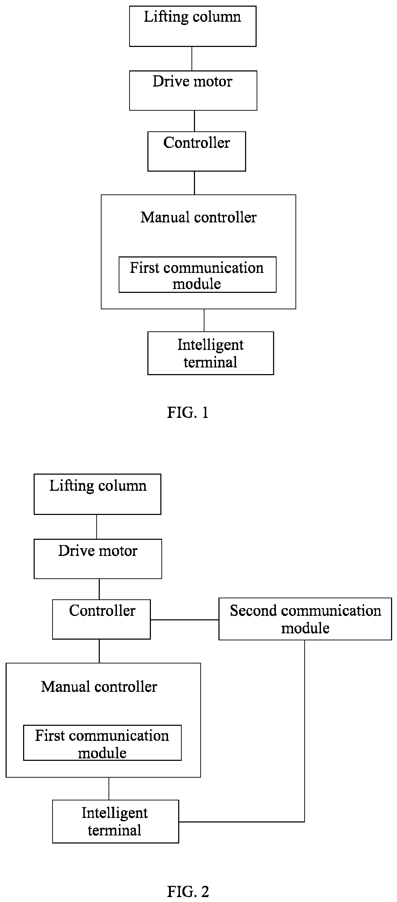

Based on the above ideas, an embodiment of the present invention provides a multi-communication height adjustable desk system. As shown in FIG. 1, the system includes a lifting column for adjusting lifting of a desk top, a drive motor for driving lifting of the lifting column, a controller for sending a drive instruction to the drive motor and a manual controller for sending a control instruction to the controller. The system further includes an intelligent terminal stored with a set height of the height adjustable desk, and the manual controller includes a first communication module for communicating with the intelligent terminal; the manual controller receives an authentication instruction sent by the intelligent terminal through the first communication module, after the authentication instruction is verified, the first communication module receives set height data of the height adjustable desk sent by the intelligent terminal, and sends the control instruction to the controller according to the set height data of the height adjustable desk, the controller sends the drive instruction to the drive motor according to the control instruction to achieve a height adjustment of the lifting column.

In this embodiment, the first communication module is an NFC module. NFC, namely Near Field Communication, is a short-distance high-frequency wireless communication technology. Devices (such as mobile phones) using NFC technology can exchange data when they are close to each other. The NFC module is easy to use, low cost and easy to accomplish data interaction between the controller and the intelligent terminal.

Preferably, a communication frequency band of the NFC module is 13.56 MHz. 13.56 MHz is a general high frequency video frequency band with high applicability.

In one embodiment, as shown in FIG. 2, a multi-communication height adjustable desk system further includes a second communication module for communicating with an intelligent terminal. After the authentication instruction is verified, the controller receives the set height data of the height adjustable desk sent by the intelligent terminal through the second communication module, and sends the control instruction to the controller according to the set height data of the height adjustable desk, and the controller sends the drive instruction to the drive motor according to the control instruction to achieve a height adjustment of the lifting column.

In this embodiment, the second communication module is a Bluetooth module. Bluetooth module is a PCBA board integrated with Bluetooth function, which is used for short-distance wireless communication. It is divided into Bluetooth data module and Bluetooth voice module according to functions. Bluetooth module refers to a basic circuit set of chip integrated with Bluetooth function, which is used for wireless network communication.

In one embodiment, after the authentication instruction is verified, the controller communicates with the intelligent terminal through the second communication module and receives the control instruction sent by the intelligent terminal, the controller sends the drive instruction to the drive motor according to the control instruction to achieve the height adjustment of the lifting column.

On the one hand, the controller can adjust the height of the lifting column according to the set height data of the height adjustable desk. On the other hand, the controller can also adjust the height of the lifting column according to the control instruction sent by the intelligent terminal and the artificial setting of the user.

In one embodiment, the controller records a connection time of the second communication module and the intelligent terminal, and when the connection time is greater than a set time, the controller sends a reminding signal to the intelligent terminal through the second communication module.

The controller records the connection time of the second communication module and the intelligent terminal, and reminds the user by sending a reminding signal to inform the user of the time spent.

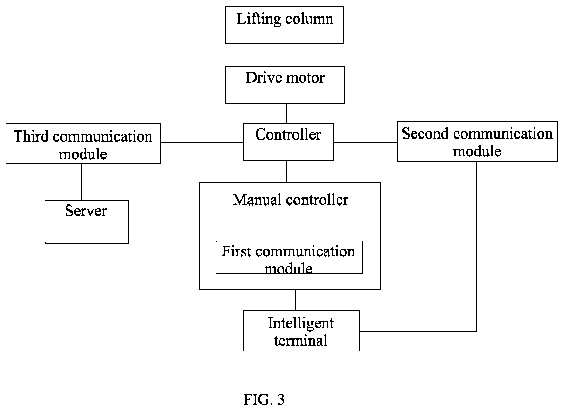

In one embodiment, as shown in FIG. 3, a multi-communication height adjustable desk system further includes third communication modules and a server connected with the third communication module, the third communication modules form a MESH network therebetween, and the server receives and stores the connection time of the second communication module and the intelligent terminal uploaded by the third communication modules.

In this embodiment, the third communication module is a WIFI module. Wi-Fi (Wireless Fidelity), also known as "mobile hotspot", is a wireless local area network technology created in IEEE 802.11 standard. Based on the close relationship between the two systems, some people regard Wi-Fi as a synonym of IEEE 802.11 standard.

The third communication modules form a MESH network therebetween to achieve the mutual transmission of data and upload the data to the server at the same time. At the server end, a current state of each height adjustable desk can be displayed according to the connection time of the second communication module and the intelligent terminal.

In addition, the intelligent terminal can upload the personal information of the user through the third communication module, and the server can monitor the user according to the personal information of the user.

In one embodiment, the intelligent terminal sends reservation time information and authentication information to the server, and the server selects unconnected third communication modules, and sends the authentication information to the controller through the third communication modules.

In this embodiment, the remote reservation of the height adjustable desk system can be achieved through the intelligent terminal. First, reservation time information and authentication information are sent to the server, the server selects the idle height adjustable desk system in this time period according to the reservation time information, and connects the third communication module where the height adjustable desk system is located, so that the height adjustable desk system can be accessed only when the corresponding authentication instruction is received, thereby achieving the remote reservation function.

Those skilled in the art to which the present invention pertains may make various modifications or additions to or similarly replace the detailed embodiments described without departing from the spirit of the present invention or exceeding the scope defined by the appended claims.

## Claims

1. A multi-communication height adjustable desk system comprising a lifting column for adjusting lifting of a desk top, a drive motor for driving lifting of the lifting column, a controller for sending a drive instruction to the drive motor and a manual controller for sending a control instruction to the controller, and further comprising an intelligent terminal stored with a set height of a height adjustable desk, and the manual controller comprising a first communication module for communicating with the intelligent terminal;
wherein the manual controller receives an authentication instruction sent by the intelligent terminal through the first communication module, after the authentication instruction is verified, the first communication module receives set height data of the height adjustable desk sent by the intelligent terminal and sends the control instruction to the controller according to the set height data of the height adjustable desk, the controller sends the drive instruction to the drive motor according to the control instruction for adjusting a height of the lifting column.

2. The multi-communication height adjustable desk system according to claim 1, wherein the multi-communication height adjustable desk system further comprises a second communication module for communicating with the intelligent terminal,
after the authentication instruction is verified, the controller receives the set height data of the height adjustable desk sent by the intelligent terminal through the second communication module and sends the control instruction to the controller according to the set height data of the height adjustable desk, and the controller sends the drive instruction to the drive motor according to the control instruction for adjusting the height of the lifting column.

3. The multi-communication height adjustable desk system according to claim 2, wherein after the authentication instruction is verified, the controller communicates with the intelligent terminal through the second communication module and receives the control instruction sent by the intelligent terminal, the controller sends the drive instruction to the drive motor according to the control instruction for adjusting the height of the lifting column.

4. The multi-communication height adjustable desk system according to claim 2, wherein the controller records a connection time of the second communication module and the intelligent terminal, and when the connection time is greater than a set time, the controller sends a reminding signal to the intelligent terminal through the second communication module.

5. The multi-communication height adjustable desk system according to claim 4, wherein the multi-communication height adjustable desk system further comprises third communication modules and a server connected with the third communication modules, the third communication modules forming a MESH network therebetween, and the server receiving and storing the connection time of the second communication module and the intelligent terminal uploaded by the third communication modules.

6. The multi-communication height adjustable desk system according to claim 5, wherein the intelligent terminal sends reservation time information and authentication information to the server, and the server selects unconnected third communication modules and sends the authentication information to the controller through the third communication modules.

7. The multi-communication height adjustable desk system according to any one of claims 1 to 6, wherein the first communication module is an NFC module.

8. The multi-communication height adjustable desk system according to claim 7, wherein a communication frequency band of the NFC module is 13.56 MHz.

9. The multi-communication height adjustable desk system according to any one of claims 2 to 6, wherein the second communication module is a Bluetooth module.

10. The multi-communication height adjustable desk system according to any one of claims 5 to 6, wherein the third communication modules are WIFI modules.
